**Europäisches Patentamt**

**European Patent Office**

**Office européen des brevets**

(19)

(11) Veröffentlichungsnummer: **0 023 623**
**A1**

(12)

# EUROPÄISCHE PATENTANMELDUNG

(21) Anmeldenummer: **80104110.4**

(22) Anmeldetag: **15.07.80**

(51) Int. Cl.³: **H 02 P 7/28**

(30) Priorität: **30.07.79 DE 2930863**

(43) Veröffentlichungstag der Anmeldung: **11.02.81**
**Patentblatt 81/6**

(84) Benannte Vertragsstaaten: **AT DE FR GB IT**

(71) Anmelder: **SIEMENS AKTIENGESELLSCHAFT Berlin und München, Postfach 22 02 61, D-8000 München 22 (DE)**

(72) Erfinder: **Siebert, Jürgen, Dr., Mühlweg 31, D-8521 Uttenreuth (DE)**

(54) **Verfahren zur Laststromerfassung in einem Gleichstrom-Umkehrsteller und Schaltungsanordnung zur Durchführung des Verfahrens.**

(57) Bei einem Gleichstrom-Umkehrsteller in Brückenschaltung mit vier Brückenzweigen (1 bis 4) wird der Laststrom ($i_A$) aus den Strömen ($i_1$,-$i_2$) durch zwei an denselben Pol (8) der Versorgungsspannungsquelle angeschlossene Brückenzweige (1, 2) ermittelt. Dabei wird jeweils der Strom durch den Brückenzweig (1, 2) erfasst, dessen Schalter (1a, 2a) geschlossen ist, sofern nicht auch der Schalter (1a, 2a) des anderen Brückenzweiges (1, 2) geschlossen ist. Wenn die Schalter (1a, 2a) beider Brückenzweige (1, 2) geschlossen sind, wird nur der Strom ($i_1$) durch einen Brückenzweig (1) ausgewertet. Wenn die Schalter (1a, 2a) beider Brückenzweige (1, 2) geöffnet sind, wird die Summe der Ströme ($i_1$-$i_2$) durch beide Brückenzweige (1, 2) erfasst. Da die Stromerfassungseinrichtungen (9, 10) bei diesem Verfahren in die Brückenzweige (1, 2) eingefügt werden können, treten an diesen im Gegensatz zu Anordnungen mit Stromerfassungseinrichtungen im Lastkreis keine Potentialsprünge auf, so dass eine einfache Auswertung möglich ist.

Dieses Verfahren kann für die Laststromerfassung in Gleichstrom-Umkehrstellern mit beliebigen Ansteuerverfahren für die Schalter eingesetzt werden, sofern über die Brückenzweige (3, 4), in denen keine Stromerfassungseinrichtung vorgesehen ist, keine Zirkulation des Laststroms auftritt.

SIEMENS AKTIENGESELLSCHAFT          Unser Zeichen
Berlin und München                  VPA **79 P 3 1 3 7** EUR


Verfahren zur Laststromerfassung in einem Gleichstrom-
Umkehrsteller und Schaltungsanordnung zur Durchführung
des Verfahrens

Die Erfindung betrifft ein Verfahren zur Laststromerfassung in einem im Mehrquadrantenbetrieb arbeitenden
Gleichstrom-Umkehrsteller mit einer an eine Versorgungsspannungsquelle angeschlossenen Brückenschaltung mit
vier Brückenzweigen, von denen jeder die Antiparallelschaltung eines elektronischen Schalters und einer
Freilaufdiode enthält, wobei der erste und zweite
Brückenzweig an denselben Pol der Versorgungsspannungsquelle angeschlossen sind und wobei über den dritten und
vierten Brückenzweig keine Zirkulation des Laststroms
erfolgt und eine Schaltungsanordnung zur Durchführung
des Verfahrens.

Bei handelsüblichen Gleichstrom-Umkehrstellern der genannten Art wird der Laststrom mit einer Stromerfassungseinrichtung gemessen, die im Lastkreis liegt.
Ein derartiges Verfahren hat den Nachteil, daß die Anschlußklemmen der Stromerfassungseinrichtung bei Betrieb
des Gleichstrom-Umkehrstellers gegenüber dem Bezugspotential Potentialsprünge in Höhe der vollen Versorgungsspannung ausführen, während die Meßgröße, also
die Spannung zwischen den Klemmen, einen verhältnismäßig
kleinen Wert aufweist. Die Stromerfassungseinrichtung
muß daher eine sehr hohe statische und dynamische
Gleichtaktunterdrückung aufweisen, die zufriedenstellend nur mit potentialtrennenden Meßgebern zu

Sid 2 Gr / 9.7.79

erreichen ist. Solche potentialtrennenden Meßgeber, wie z.B. Shuntwandler, Hallwandler und Isolierverstärker sind jedoch sehr teuer. Billigere Meßgeber wie Differenzverstärker oder Differenzbildner mit Operationsverstärkern besitzen keine für diesen Zweck befriedigende Gleichtaktunterdrückung und bilden daher ein fehlerbehaftetes, durch Störspannungen verzerrtes Meßsignal.

Ein weiterer Nachteil der Laststromerfassung im Lastkreis besteht darin, daß ein eventueller Brückenkurzschluß nicht erfaßt wird. Bei transistorbestückten Gleichstrom-Umkehrstellern ist jedoch eine schnelle Erfassung von Überströmen und ein rasches Sperren der Leistungstransistoren unbedingt erforderlich, weil die Transistoren nicht zuverlässig durch Sicherungen geschützt werden können. Bei den bekannten Schaltungen mußte daher zur Erfassung eines Brückenkurzschlusses eine zusätzliche Strommeßeinrichtung, z.B. ein Shunt im Zwischenkreis angeordnet werden.

Aus der DE-OS 27 29 407 ist ein Gleichstromsteller bekannt, bei dem zur Erfassung des durch ein Transistorpaar fließenden Stroms zwei Transistoren über einen gemeinsamen Stromwandler an einen Pol der Versorgungsspannungsquelle angeschlossen sind. Damit können Überströme in den Transistoren erfaßt werden, eine Laststrommessung ist jedoch nicht möglich, da das Vorzeichen des Laststroms nicht ermittelt werden kann und die über Freilaufdioden in die Versorgungsspannungsquelle fließenden Ströme nicht über den Stromwandler fließen.

0023623

Aufgabe der Erfindung ist es daher, ein Verfahren und eine Schaltungsanordnung zur Durchführung des Verfahrens anzugeben, mit dem der Laststrom mit geringem Aufwand und hoher Geschwindigkeit gemessen werden kann und mit dem auch ein eventueller Brückenkurzschluß erfaßt wird.

Diese Aufgabe wird erfindungsgemäß dadurch gelöst, daß der Laststrom nach folgendem Schema aus den Strömen durch den ersten und zweiten Brückenzweig ermittelt wird, wobei in den Pol der Versorgungsspannungsquelle fließende Ströme positiv bewertet werden.

- Bei geschlossenem Schalter des ersten Brückenzweiges und geöffnetem Schalter des zweiten Brückenzweiges wird der Strom durch den ersten Brückenzweig ausgewertet.

- Bei geschlossenem Schalter des zweiten Brückenzweiges und geöffnetem Schalter des ersten Brückenzweiges wird der invertierte Strom durch den zweiten Brückenzweig ausgewertet.

- Bei geschlossenen Schaltern des ersten und zweiten Brückenzweiges wird der Strom durch den ersten oder der invertierte Strom durch den zweiten Brückenzweig ausgewertet.

- Bei geöffneten Schaltern des ersten und zweiten Brückenzweiges wird die Summe des Stroms durch den ersten und des invertierten Stroms durch den zweiten Brückenzweig ausgewertet.

Dieses Verfahren ermöglicht es, den Laststrom aus den Strömen durch zwei Brückenzweige zu ermitteln. Das hat den Vorteil, daß an Stromerfassungseinrichtungen, die in die Brückenzweige eingefügt und an einem Pol der Versorgungsspannungsquelle angeschlossen sind, bei Betrieb des Gleichstrom-Umkehrstellers keine Potentialsprünge auftreten, so daß der Meßwert ohne überlagertes Gleichtaktsignal abgegriffen werden kann. An die nachgeschaltete Auswerteeinrichtung werden daher keine Anforderungen in Bezug auf die Gleichtaktunterdrückung gestellt, so daß der Meßwert mit großer Genauigkeit und geringem Aufwand erfaßt werden kann. Da ein eventueller Brückenkurzschluß stets über den ersten oder zweiten Brückenzweig fließt, wird dieser mit dem beschriebenen Verfahren ebenfalls erfaßt, so daß keine zusätzlichen Kurzschluß-Erfassungseinrichtungen notwendig sind.

Das genannte Verfahren zur Laststromerfassung ist bei jedem Steuerverfahren anwendbar, bei dem keine Zirkulation des Laststroms über den dritten und vierten Brückenzweig erfolgt. Bei einzelnen Steuerverfahren kann dieses Verfahren vereinfacht werden. Wenn z.B. die Schalter des ersten und zweiten Brückenzweiges nie gleichzeitig geschlossen sind, entfällt die entsprechende logische Verknüpfung.

Wenn über den ersten und zweiten Brückenzweig keine Zirkulation des Laststromes erfolgt, kann in besonders einfacher Weise der Laststrom aus der Summe des Stroms durch den ersten und des invertierten Stroms durch den zweiten Brückenzweig ermittelt werden. In diesem Fall kann die Auswertung durch eine Summierstufe erfolgen und die Auswertelogik entfällt.

0023623

Zweckmäßigerweise sind der erste und der zweite Brückenzweig am Bezugspotential der Versorgungsspannungsquelle angeschlossen. Damit kann eine Stromerfassungseinrichtung direkt an das Bezugspotential angeschlossen werden, so daß ein auf Bezugspotential bezogenes Meßsignal zur Verfügung steht, dessen Auswertung besonders einfach ist.

Bei einer Schaltungsanordnung zur Durchführung des Verfahrens sind zweckmäßigerweise zwischen erstem und zweitem Brückenzweig und dem zugehörigen Pol der Versorgungsspannungsquelle eine erste und eine zweite Stromerfassungseinrichtung angeordnet, die jeweils aus einem Widerstand und einem Differenzverstärker bestehen, dessen Eingangsklemmen mit den Anschlußklemmen des zugeordneten Widerstands verbunden sind, wobei die erste und die zweite Stromerfassungseinrichtung über je einen Meßwert-Schalter mit dem Eingang einer Summierstufe verbunden sind, an deren Ausgang ein Meßwert für den Laststrom ansteht und wobei die Meßwertschalter in Abhängigkeit vom Schaltzustand der Schalter angesteuert werden. Mit dieser Schaltung kann das genannte Verfahren auf einfache Weise realisiert werden.

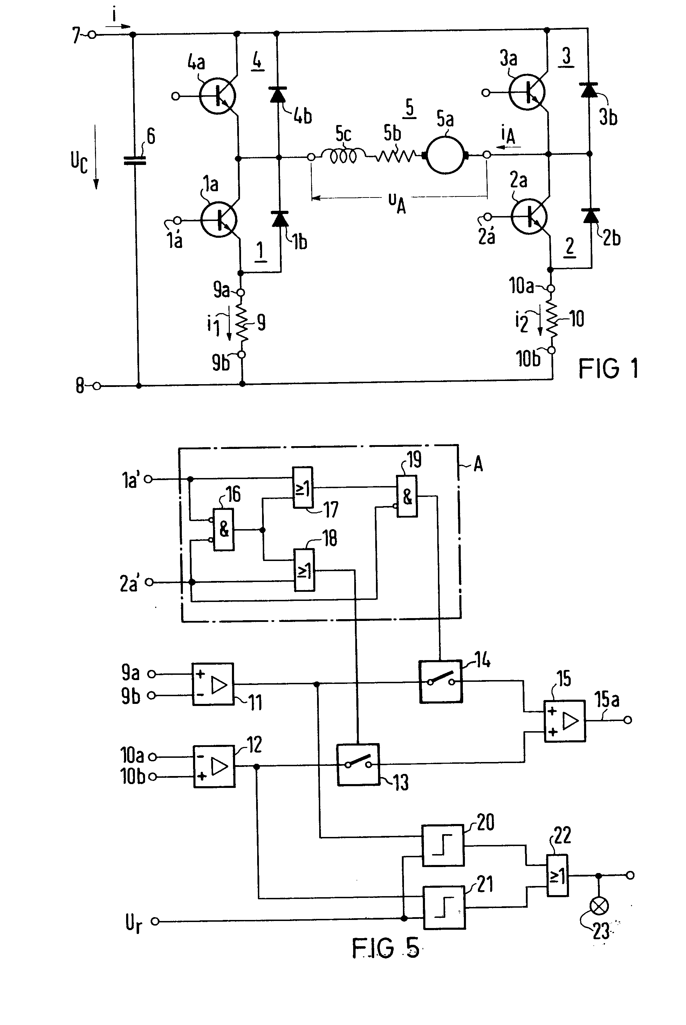

Das erfindungsgemäße Verfahren sowie eine Schaltungsanordnung zur Durchführung des Verfahrens werden im folgenden anhand der Figuren 1 bis 5 beispielhaft näher erläutert.

FIG 1 zeigt die Schaltung des Leistungsteils eines Gleichstrom-Umkehrstellers. Dabei sind vier Transistoren 1a bis 4a als elektronische Schalter in Brückenschaltung zwischen zwei Eingangsklemmen 7 und 8 angeordnet, an denen eine Versorgungs-Gleichspannung $U_c$ ansteht.

Jeder der Transistoren 1a bis 4a ist mit einer Freilaufdiode 1b bis 4b überbrückt, die entgegengesetzt zur Durchlaßrichtung des zugeordneten Transistors gepolt ist. Zwischen der mit dem Bezugspotential der Versorgungs-Gleichspannung $U_C$ beaufschlagten Klemme 8 und den Transistoren 1a und 2a ist je ein Widerstand 9 bzw. 10 als Stromerfassungseinrichtung angeordnet. Zwischen den Eingangsklemmen 7 und 8 liegt ein Kondensator 6, der als Energiespeicher dient und Stromstöße aufnimmt bzw. abgibt. Diagonal in der Brückenschaltung ist zwischen dem Verbindungspunkt der Transistoren 1a und 4a und dem Verbindungspunkt der Transistoren 2a und 3a ein Gleichstrommotor 5 als Last angeordnet. Der Gleichstrommotor 5 ist mit seinem Ersatzschaltbild mit Ankerinduktivität 5c und Ankerwiderstand 5b dargestellt.

Mit dieser Schaltungsanordnung ist bei Ansteuerung der Transistoren 1a bis 4a durch ein geeignetes Steuerimpulsraster ein Vierquadrantbetrieb des Motors 5 möglich, d.h. der Motor 5 kann sowohl im Rechtslauf als auch im Linkslauf angetrieben und gebremst werden.

Mit den Widerständen 9 und 10 kann bei allen Betriebsverfahren des Gleichstrom-Umkehrstellers der Motorstrom $i_A$ erfaßt werden, sofern keine Zirkulation des Motorstroms über die Brückenzweige 3 und 4 auftritt. Unter dieser Voraussetzung fließt nämlich der Motorstrom stets über einen der Widerstände 9 oder 10, wie im folgenden nachgewiesen wird. Zur Definition der Stromrichtungen werden dabei entsprechend Figur 1 die in den Pol 8 der Versorgungsspannungsquelle fließenden Ströme $i_1$, $i_2$ sowie der vom Verbindungspunkt der Brückenzweige 2 und 3 zum Verbindungspunkt der Brückenzweige 1 und 4 fließende Motorstrom $i_A$ positiv bewertet. Wenn der Transistor 1a eingeschaltet ist, so wird der Transistor 4a stets ausgeschaltet sein, da sonst ein Kurzschluß auftreten würde. Ein positiver Motorstrom $i_A$ wird daher stets über den Transistor 1a und den Widerstand 9 fließen, so daß bei leitendem Transistor 1a der Motorstrom $i_A$ gleich dem Strom $i_1$ durch den Widerstand 9 ist. Über die Diode 4b wird sich kein Stromfluß ergeben, da an ihrer Kathode das positive Potential der Eingangsklemme 7 ansteht. Ein negativer Motorstrom $i_A$ kann nur über die Diode 1b fließen und ist somit ebenfalls gleich dem Strom $i_1$ durch den Widerstand 9.

Bei leitendem Transistor 2a kann in analoger Weise der Motorstrom ebenfalls nur über den Transistor 2a oder die Diode 2b und somit auch über den Widerstand 10 fließen. Dabei ist der Strom $i_2$ durch den Widerstand 10 in der eingezeichneten Stromrichtung gleich dem negativen Motorstrom $i_A$.

Wenn beide Transistoren 1a und 2a leitend sind, so werden stets die Transistoren 3a und 4a gesperrt sein, da sonst ein Kurzschluß auftreten würde. Der Motorstrom $i_A$ kann dabei entweder über den Widerstand 9, die Diode 1b, den Motor 5, den Transistor 2a und den Widerstand 10 oder über den Widerstand 10, die Diode 2b, den Motor 5, den Transistor 1a und den Widerstand 9 zirkulieren. In diesem Fall durchfließt also der Motorstrom $i_A$ beide Widerstände 9 und 10.

0023623

Wenn keiner der Transistoren 1a und 2a leitend ist, kann der Motorstrom über den Widerstand 9, die Diode 1b, den Motor 5 und die Diode 3b oder über den Widerstand 10, die Diode 2b, den Motor 5 und die Diode 4b in die Versorgungsspannungsquelle $U_c$ zurückfließen. Wenn bei sperrenden Transistoren 1a und 2a wenigstens einer der Transistoren 3a und 4a leitend wäre, so könnte auch eine Zirkulation über einen Transistor 3a bzw. 4a und eine Diode 4b bzw. 3b erfolgen. In diesem Fall würde der Motorstrom $i_A$ nicht über einen Widerstand 9 bzw. 10 fließen und könnte somit nicht erfaßt werden. Für Steuerverfahren, bei denen der Laststrom über die beiden oberen Brückenzweige zirkulieren kann, ist daher das beschriebene Verfahren zur Stromerfassung nicht anwendbar. Von dieser Ausnahme abgesehen, läßt sich also der Motorstrom nach folgenden logischen Gleichungen aus den Strömen $i_2$ durch den Widerstand 9 und den Strom $i_3$ durch den Widerstand 10 ermitteln:

(1)     $A \wedge \overline{B} = C$

(2)     $\overline{A} \wedge B = D$

(3)     $A \wedge B = C \vee D$

(4)     $\overline{A} \wedge \overline{B} = C, D$

Dabei bedeutet A: Der Transistor 1a ist leitend,

B: Der Transistor 2a ist leitend,

C: Der Strom $i_1$ wird ausgewertet,

D: Der Strom $-i_2$ wird ausgewertet.

C, D: Die Summe der Ströme $i_1$, $-i_2$ wird ausgewertet.

Diese allgemeine Regel kann für bestimmte Steuerverfahren vereinfacht werden. Im allgemeinen werden z.B. die Transistoren 1a und 2a nicht gleichzeitig leitend sein, so daß die logische Bedingung (3) entfällt. Die logischen Bedingungen (1) und (2) vereinfachen sich dabei:

aus (1)    wird    A = C

aus (2)    wird    B = D

Bei Steuerverfahren, bei denen keine Zirkulation des Laststromes über die Brückenzweige 1 und 2 auftritt, muß zur Erfassung des Laststroms lediglich die Summe der Ströme $i_1$ und $-i_2$ ausgewertet werden, da in diesem Fall der Motorstrom nicht über beide Widerstände 9 und 10 gleichzeitig fließen kann. Eine Zirkulation über die Brückenzweige 1 und 2 kann dann nicht auftreten, wenn bei leitendem Transistor 1a oder 2a stets auch einer der Transistoren 3a oder 4a leitet.

Das erfindungsgemäße Verfahren zur Laststromerfassung wird im folgenden beispielhaft anhand einiger spezieller Steuerverfahren dargestellt.

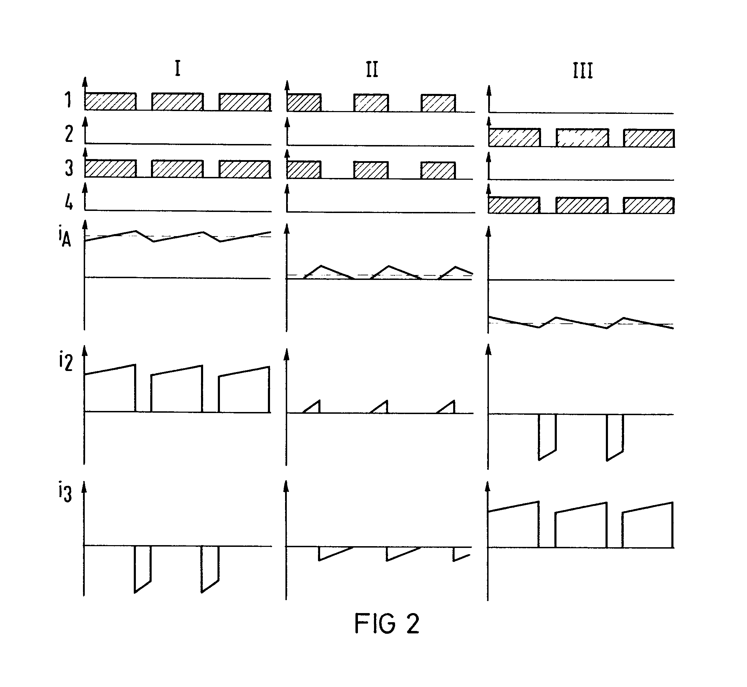

Beim Steuerverfahren nach FIG 2 fließt bei den unter I und II dargestellten Steuerimpulsrastern der Motorstrom $i_A$ in positiver Richtung, d.h. der Motor 5 wird im Rechtslauf angetrieben. Beim Steuerimpulsraster I ist der Motorstrom $i_A$ in der Nähe seines positiven Maximalwertes, beim Steuerimpulsraster II ist der Motorstrom $i_A$ verringert. Das Steuerimpulsraster III ergibt einen negativen Motorstrom $i_A$, der in der Nähe seines negativen Maximalwertes liegt. Der Motor 5 wird dabei nach links angetrieben.

Wie FIG 2 zeigt, werden bei Rechtslauf die Transistoren 1 und 3 gleichzeitig getaktet, während die Transistoren 2 und 4 gesperrt bleiben. Dabei verändert sich mit dem Puls-Pausenverhältnis der Ansteuerimpuls das Antriebsmoment des Motors. Bei Linkslauf des Motors werden die Transistoren 2 und 4 getaktet, die Transistoren 1 und 3 bleiben gesperrt. Wie FIG 2 zeigt, ergibt sich bei leitenden Transistoren ein betragsmäßig ansteigender Motorstrom $i_A$, bei sperrenden Transistoren ein betragsmäßig abnehmender Motorstrom $i_A$. In FIG 2 sind ferner die Ströme $i_1$ und $i_2$ durch die Widerstände 9 und 10 dargestellt. Während die Transistoren 1 und 3 leiten, fließt der Motorstrom $i_A$ als Strom $i_1$ über den Widerstand 9. In dieser Zeit ist der Strom $i_2$ über den Widerstand 10 Null. Während der Sperrphasen der Transistoren 1 und 3 fließt der Motorstrom $i_A$ in negativer Richtung als Strom $-i_2$ über den Widerstand 10, die Freilaufdiode 2b, den Motor 5 und die Freilaufdiode 4b in die Versorgungsspannungsquelle zurück. Während dieser Zeit ist der Strom $i_1$ Null. Bei Linkslauf des Motors fließt der Motorstrom $i_A$ in positiver Richtung über den Widerstand 10. Während der Einschaltpausen der Transistoren 2 und 4 fließt der in die Versorgungsspannungsquelle zurückfließende Motorstrom $i_A$ in negativer Richtung über den Widerstand 9. Aus den Beziehungen zwischen Motorstrom und den Strömen $i_1$ und $i_2$ ergibt sich, daß der Motorstrom $i_A$ bei diesem Steuerverfahren durch Addition von $i_1$ und $-i_2$ ermittelt werden kann. Eine Auswertelogik ist in diesem Fall nicht erforderlich.

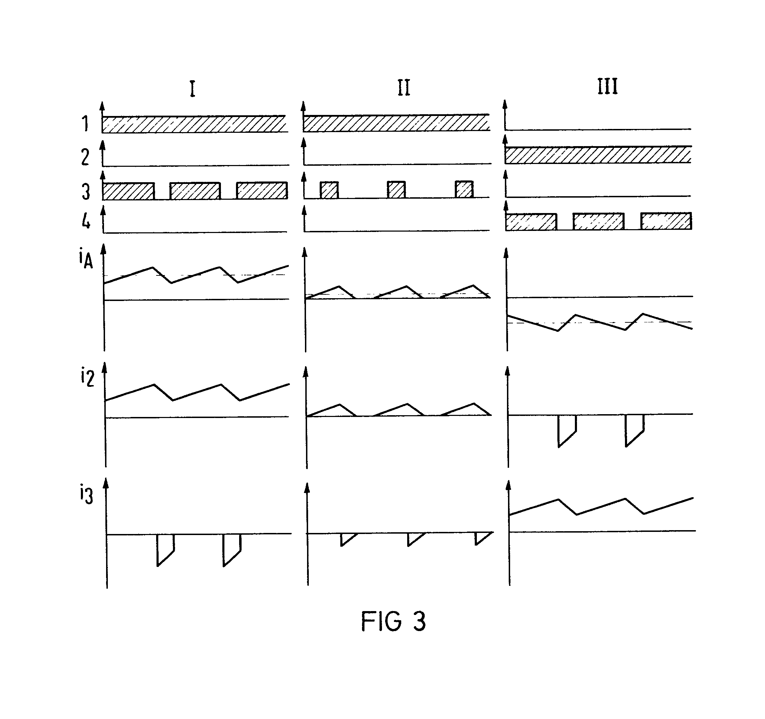

FIG 3 zeigt ein Steuerverfahren, bei dem bei jeder Stromrichtung ein Transistor 1 oder 2 ständig eingeschaltet
bleibt, während der diagonal gegenüberliegende Transistor 3 oder 4 getaktet wird. Auch bei diesem Steuerverfahren fließt während der Leitzeit der Transistoren 1
und 3 der Motorstrom $i_A$ als Strom $i_2$ über den Widerstand 9, bei leitenden Transistoren 3 und 4 fließt der
negative Motorstrom $i_A$ in positiver Richtung als Strom $i_1$
über den Widerstand 10. Im Gegensatz zum Steuerverfahren
nach FIG 2 fließt der Motorstrom $i_A$ nicht in die Versorgungsspannungsquelle zurück, wenn ein Transistor 3
oder 4 sperrt, sondern er fließt je nach Stromrichtung
über den Widerstand 9, die Diode 1b, den Motor 5, den
Transistor 2a und den Widerstand 10 oder über den
Widerstand 10, die Diode 2b, den Motor 5, den Transistor 1a und den Widerstand 9. In diesem Fall ist also
eine Addition der Ströme $i_1$ und $i_2$ zur Erfassung des
Motorstroms $i_A$ nicht möglich, da dieser sonst während
der Sperrzeiten der Transistoren 1 und 2 doppelt erfaßt wird. Bei diesem Steuerverfahren wird bei leitendem Transistor 1 der Strom $i_1$, bei leitendem Transistor 2 der negative Strom $-i_3$ erfaßt, da diese jeweils
gleich dem Motorstrom $i_A$ sind. Bei sperrenden Transistoren 1 und 2 wird die Summe der Ströme $i_1$ und $-i_2$ erfaßt,
da in diesem Fall entweder $i_1$ oder $-i_2$ gleich dem Motorstrom $i_A$ ist.

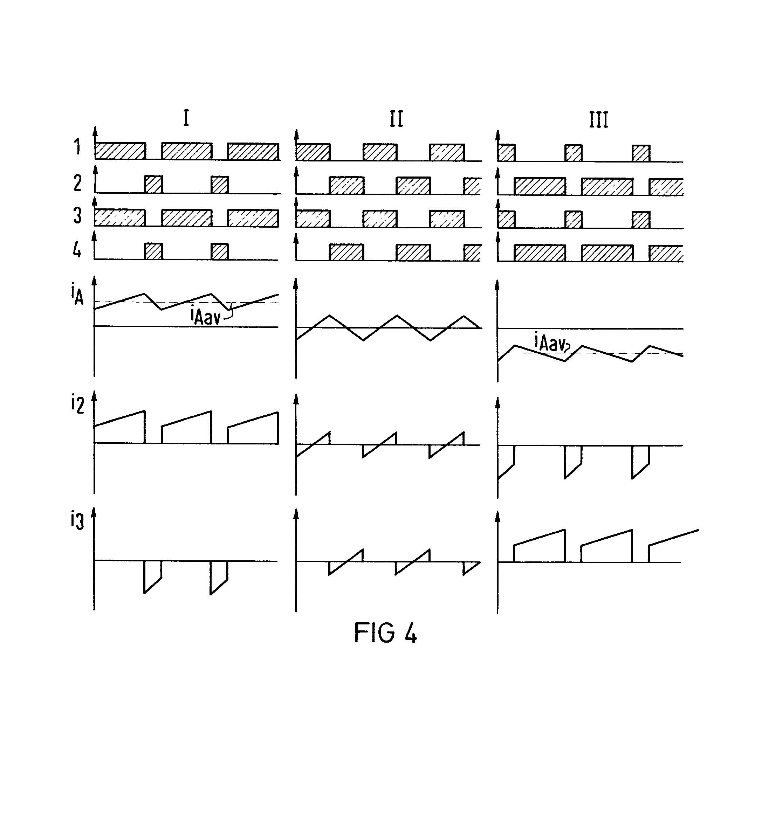

Das Steuerverfahren nach FIG 4 unterscheidet sich vom
Steuerverfahren nach FIG 2 dadurch, daß während der
Sperrzeiten der Transistoren 1 und 3 bzw. 2 und 4 die
Transistoren 2 und 4 bzw. 1 und 3 eingeschaltet werden.
Im Stromverlauf des Motorstroms $i_A$ wirkt sich der Unterschied im Steuerverfahren darin aus, daß der während der Sperrzeit der Transistoren 1 und 3 bzw. 2 und 4 in die Versorgungsspannungsquelle zurückfließende Motorstrom $i_A$ bei kleiner Aussteuerung auch seine Richtung umkehren kann und dann nicht mehr über die Freilaufdioden, sondern über die eingeschalteten Transistoren fließt. Auch hierbei fließt jedoch bei Rechtslauf des Motors der Motorstrom $i_A$ während der Einspeisephase ausschließlich über den Widerstand 9, während der Rückspeisephase in negativer Richtung ausschließlich über den Widerstand 10. Bei Linkslauf des Motors $i_A$ fließt der Motorstrom während der Einspeisephase ausschließlich über den Widerstand 10, während der Rückspeisephase ausschließlich über den Widerstand 9. Auch bei diesem Steuerverfahren kann daher der Motorstrom $i_A$ durch Addition von $i_1$ und $-i_2$ ohne Auswertelogik ermittelt werden.

FIG 5 zeigt eine Auswerteschaltung, die aus den Spannungsabfällen an den Widerständen 9 und 10 den Motorstrom $i_A$ ermittelt. Diese Auswerteschaltung ist für alle Steuerverfahren anwendbar, sofern keine Zirkulation des Laststroms über die Brückenzweige 3 und 4 auftritt und kann für spezielle Steuerverfahren entsprechend vereinfacht werden. Die Anschlußklemmen 9a und 9b bzw. 10a und 10b der Widerstände 9 und 10 werden mit den Eingängen je eines Differenzverstärkers 11 bzw. 12 verbunden. Dabei wird die Anschlußklemme 9a dem positiven Eingang des Differenzverstärkers 11, die Anschlußklemme 10a dagegen dem negativen Eingang des Differenzverstärkers 12 zugeführt, so daß das Vorzeichen des Spannungsabfalls am Widerstand 9 erhalten bleibt, das Vorzeichen des Spannungsabfalls am Widerstand 10 jedoch umgedreht wird. Die Differenzverstärker 11 und 12 sind über je einen Meßwertschalter 14 bzw. 13 mit den Eingängen einer Additionsstufe 15 verbunden. Die Meßwertschalter 13 und 14 werden von der Ansteuereinrichtung A angesteuert. Die Eingangsklemmen 1a' und 2a' sind mit den Steuereingängen der Transistoren 1a und 2a verbunden und liegen an je einem Eingang der ODER-Gatter 17 und 18 und je einem invertierenden Eingang eines UND-Gatters 16. Der Ausgang des UND-Gatters 16 ist mit den zweiten Eingängen der ODER-Gatter 17 und 18 verbunden. Das Ausgangssignal des ODER-Gatters 18 steuert den Meßwertschalter 13 an, das Ausgangssignal des ODER-Gatters 17 ist einem Eingang eines UND-Gliedes 19 zugeführt, dessen zweiter, invertierender Eingang mit der Eingangsklemme 2a' verbunden ist. Mit dem Ausgangssignal des UND-Gatters 19 wird der Meßwertschalter 14 angesteuert. Die Ansteuereinrichtung A ist entsprechend dem allgemeinen Fall der Stromauswertung so ausgebildet, daß bei angesteuertem Transistor 1a und nicht angesteuertem Transistor 2a der Spannungsabfall am Widerstand 9 auf den Summierverstärker 15 durchgeschaltet wird, bei angesteuertem Transistor 2a und nicht angesteuertem Transistor 1a der Spannungsabfall am Widerstand 10, bei gleichzeitiger Ansteuerung der Transistoren 1a und 2a der Spannungsabfall eines der beiden Widerstände 9 und 10, in diesem Fall des Widerstandes 10 und bei fehlendem Ansteuersignal für die Transistoren 1a und 2a die Spannungsabfälle am Widerstand 9 und am Widerstand 10 auf den Summierverstärker 15 durchgeschaltet werden. Damit ergibt sich am Ausgang des Summierverstärkers 15 ein Meßwert für den Motorstrom $i_A$. Wie bereits erläutert, können bei Steuerverfahren, bei denen der Motorstrom $i_A$ stets nur über einen Widerstand 9 oder 10 fließt, die Ansteuereinrichtung A und auch die Meßwertschalter 13 und 14 entfallen. Bei Steuerverfahren, bei denen die Transistoren 1a und 2a nicht gleichzeitig eingeschaltet werden, kann das UND-Gatter 19 entfallen und der Ausgang des ODER-Gatters 17 wird direkt mit dem Steuereingang des Meßwertschalters 14 verbunden.

Die Auswerteschaltung nach FIG 5 enthält außerdem zwei Grenzwertgeber 20 und 21, deren Grenzwerteingänge mit den Ausgängen der Differenzverstärker 11 und 12 verbunden sind und an deren Referenzeingängen eine Referenzspannung $U_r$ liegt. Mit diesen Grenzwertgebern kann erfaßt werden, wenn der Motorstrom $i_A$ unzulässige Werte erreicht oder wenn ein Brückenkurzschluß auftritt. Die Grenzwertgeber 20 und 21 sind über ein ODER-Gatter 22 mit einer Anzeigeeeinrichtung 23 verbunden. Bei Ansprechen der Grenzwertgeber 20 oder 21 kann auch eine automatische Abschaltung des Gleichstrom-Umkehrstellers, z.B. durch Sperrung aller Transistoren eingeleitet werden.

4 Patentansprüche
5 Figuren

<u>Patentansprüche</u>

1. Verfahren zur Laststromerfassung in einem im Mehrquadrantenbetrieb arbeitenden Gleichstrom-Umkehrsteller mit einer an eine Versorgungsspannungsquelle angeschlossenen Brückenschaltung mit vier Brückenzweigen, von denen jeder die Antiparallelschaltung eines elektronischen Schalters und einer Freilaufdiode enthält, wobei der erste und zweite Brückenzweig an denselben Pol der Versorgungsspannungsquelle angeschlossen sind und wobei über den dritten und vierten Brückenzweig keine Zirkulation des Laststromes erfolgt, d a d u r c h  g e - k e n n z e i c h n e t , daß der Laststrom ($i_A$) nach folgendem Schema aus den Strömen ($i_1'$, $i_2$) durch den ersten und zweiten Brückenzweig (1, 2) ermittelt wird, wobei in den Pol (8) der Versorgungsspannungsquelle fließende Ströme ($i_1'$, $i_2$) positiv bewertet werden.

- Bei geschlossenem Schalter (1a) des ersten Brückenzweiges (1) und geöffnetem Schalter (2a) des zweiten Brückenzweiges (2) wird der Strom ($i_1$) durch den ersten Brückenzweig (1) ausgewertet.

- Bei geschlossenem Schalter (2a) des zweiten Brückenzweiges (2) und geöffnetem Schalter (1a) des ersten Brückenzweiges (1) wird der invertierte Strom ($-i_2$) durch den zweiten Brückenzweig (2) ausgewertet.

- Bei geschlossenen Schaltern (1a, 2a) des ersten und zweiten Brückenzweiges (1, 2) wird der Strom ($i_1$) durch den ersten oder der invertierte Strom ($-i_2$) durch den zweiten Brückenzweig ausgewertet.

0023623

- Bei geöffneten Schaltern (1a, 2a) des ersten und zweiten Brückenzweiges (1, 2) wird die Summe des Stroms ($i_1$) durch den ersten und des invertierten Stroms ($-i_2$) durch den zweiten Brückenzweig (1, 2) ausgewertet.

2. Verfahren nach Anspruch 1, wobei über den ersten und zweiten Brückenzweig keine Zirkulation des Laststroms erfolgt, d a d u r c h  g e k e n n z e i c h n e t , daß der Laststrom ($i_A$) aus der Summe des Stroms ($i_1$) durch den ersten und des invertierten Stroms ($-i_2$) durch den zweiten Brückenzweig (1, 2) ermittelt wird.

3. Verfahren nach Anspruch 1 oder Anspruch 2, d a - d u r c h  g e k e n n z e i c h n e t , daß der erste und zweite Brückenzweig (1, 2) am Bezugspotential der Versorgungsspannungsquelle angeschlossen sind.

4. Schaltungsanordnung zur Durchführung eines Verfahrens nach einem der Ansprüche 1 bis 3, d a d u r c h g e k e n n z e i c h n e t , daß zwischen erstem und zweitem Brückenzweig (1, 2) und dem zugehörigen Pol (8) der Versorgungsspannungsquelle eine erste und eine zweite Stromerfassungseinrichtung (9, 11; 10, 12) angeordnet sind, die jeweils aus einem Widerstand (9, 10) und einem Differenzverstärker (11, 12) bestehen, dessen Eingangsklemmen mit den Anschlußklemmen (9a, 9b; 10a, 10b) des zugeordneten Widerstandes (9, 10) verbunden sind, daß die erste und zweite Stromerfassungseinrichtung über je einen Meßwert-Schalter (14, 13) mit dem Eingang einer Summierstufe (15) verbunden sind, an deren Ausgang (15a) ein Meßwert für den Laststrom ansteht und daß die Meßwertschalter (13, 14) in Abhängigkeit vom Schaltzustand der Schalter (1a, 2a) angesteuert werden.

0023623

79 P 3137

FIG 1

FIG 5

FIG 2

FIG 3

FIG 4

Europäisches
Patentamt

**EUROPÄISCHER RECHERCHENBERICHT**

0023623
Nummer der Anmeldung

EP 80 10 4110.4

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | GB - A - 1 152 144 (GENERAL ELECTRIC CO.)<br>* Seite 4, Zeilen 61 bis 105;<br>Seite 8, Zeilen 67 bis 127 *<br>-- | 1-4 | H 02 P    7/28 |
| X | DE - A - 2 422 501 (VEB STARKSTROM-ANLAGENBAU KARL-MARX-STADT)<br>* Seite 4, Absätze 1 bis 3;<br>Seite 7, Absatz 1 *<br>-- | 1-3 | **RECHERCHIERTE SACHGEBIETE (Int. Cl.3)** |
| | US - A - 4 066 945 (D.R. KORTE, JR.)<br>* Spalte 1, Zeilen 29 bis 54;<br>Spalte 2, Zeile 51 bis Spalte 3, Zeile 37 *<br>-- | 1-3 | H 02 M    3/155<br>H 02 P    5/00<br>H 02 P    7/00 |
| | ELEKTRIE, Band 28, Nr. 7, 1974<br>M. SCHULZE "Transistor-Gleichstromsteller für reaktionsschnelle Antriebe kleiner Leistung"<br>Seiten 368 bis 370<br>* Seite 370, linke Spalte *<br>-- | 1-3 | |
| A | FR - A - 1 601 478 (R.S. STOKVIS ET FILS)<br>---- | | **KATEGORIE DER GENANNTEN DOKUMENTE**<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

| X | Der vorliegende Recherchenbericht wurde für alle Patentansprüche erstellt. | | |
|---|---|---|---|
| Recherchenort | Abschlußdatum der Recherche | Prüfer | |
| Berlin | 07-11-1980 | GESSNER | |

EPA form 1503.1   06.78